# EUROPEAN PATENT APPLICATION

(11) **EP 4 484 523 A1**
(43) Date of publication of application: **01.01.2025**
(21) Application number: 23182179.4
(22) Date of filing: 28.06.2023
(51) Int. Cl.: C10G 1/02, C10B 53/02, C10B 53/07, C10G 1/08, C10G 1/10, C07C 5/41, C07C 15/02

(54) **CATALYTIC AROMATIZATION OF PYROLYSIS VAPORS**

(71) Applicant: BioBTX B.V., 9747 AA Groningen (NL)
(72) Inventor: SCHENK, Niels Jan, 9747 AA Groningen (NL); VAN AKKER, Matthijs Geert, 9747 AA Groningen (NL)
(74) Representative: V.O.

(57) **Abstract**

The invention is in the field of catalytic processes. In particular the present invention is directed to a thermo-catalytic pyrolysis process for the preparation of low molecular weight monocyclic aromatic compounds.

In accordance with the present invention there is provided a thermo-catalytic pyrolysis process for the preparation of low molecular weight monocyclic aromatic compounds from a feed stream comprising biomass and/or one or more polymers, comprising the steps of: a) subjecting the feed stream comprising biomass and/or one or more polymers to a pyrolysis treatment at a pyrolysis temperature to produce pyrolysis vapors; b) optionally cooling or heating the pyrolysis vapors; c) contacting the pyrolysis vapors with an aromatization catalyst at an aromatization temperature in a catalytic conversion step to yield a conversion product comprising low molecular weight aromatic compounds; and d) optionally recovering the low molecular weight monocyclic aromatic compounds from the conversion product; wherein catalytic conversion step c) is performed in a smooth or bubbling fluidized bed reactor.

## Description

### BACKGROUND OF THE INVENTION

The invention is in the field of catalytic processes. In particular the present invention is directed to a thermo-catalytic pyrolysis process for the preparation of low molecular weight monocyclic aromatic compounds.

Low molecular weight monocyclic aromatic compounds such as benzene, toluene, and xylenes (BTX) are important starting materials for high volume chemicals such as ethylbenzene, cumene, cyclohexane, adipic acid (from benzene), toluene diisocyanate, benzaldehyde and benzoic acid (from toluene) and terephthalic acid (from p-xylene).

Currently, the above-described aromatic compounds are mainly produced via refinery processes of fossil resources, such as crude oil or coal. Common processes include steam cracking, steam reforming, catalytic cracking, such as fluid catalytic cracking, catalytic reforming, and coal tar distillation.

Alternatively, biomass, waste or a combination thereof may be used for preparation or aromatics. Different kinds of biomass and/or waste can be used. Examples of waste that can be used include organic or biodegradable waste, and mixed plastic waste. Several routes have been proposed which can convert biomass or waste plastics materials via chemical synthesis and/or thermochemical conversion to aromatics.

The thermal conversion of biomass and/or mixed plastic waste towards aromatics is a promising technique to reduce the plastic disposal and produce high-volume chemicals, especially for mixed and/or contaminated plastics that cannot be easily recycled. Whereas currently these streams are being incinerated and, in some cases, used for the conversion of plastics into alternative fuels, a conversion towards chemical building blocks for the chemical industry would significantly add value to these waste streams.

A thermo-catalytic process for the preparation of low molecular weight monocyclic aromatic compounds is described in WO2020204707. This document describes a two-step process, comprising the steps of subjecting a feed stream comprising plastic to a pyrolysis treatment producing pyrolysis vapors and the step of contacting the pyrolysis vapors with an aromatization catalyst in a catalytic conversion step to yield a conversion product comprising low molecular weight aromatic compounds.

However, as mentioned in WO2020204707, the product stream does not consist completely of aromatic compounds, and will typically also contain gaseous compounds such as carbon dioxide, carbon monoxide, hydrogen, water, low molecular weight alkanes, as well as by-products, such as olefins and oxygenates. In order to obtain low molecular weight monocyclic aromatic compounds without by-products and with higher purity, it is needed to fractionate and/or purify the low molecular weight monocyclic aromatic compounds. WO2020204707 shows that the BTX yield, expressed in wt.% based on the organic fraction present in the plastics depends on feedstock and the temperature of the pyrolysis process.

Catalytic processes for producing aromatics can be performed in fluidized bed reactors. A well-known example of a process creating aromatics in a fluidized bed reactor is fluid catalytic cracking (FCC). In FCC, not only cracking reactions take place, but also aromatization reactions play an important role. In FCC, riser reactors are typically used, more specifically Davison risers, in which the mixture of reactants/products and fluidized catalyst particles move upwards together, in a plug-flow manner. These fluidized conditions are often referred to as fast fluidization. After reaching the top of the riser, coke-laden catalyst particles are regenerated and fed as fresh catalyst to the bottom of the riser. In order to achieve these conditions, the flow rate of reactants is relatively high compared to the diameter of the reactor, resulting in a relatively short residence time of reactants/products in the catalyst bed.

Because the reactants/products and catalyst particles move together, a downside of these fast fluidization conditions is that it is difficult to control the rate of catalyst regeneration independently of the space velocity in the reactor. Another downside of using fast fluidization and/or a riser reactor is that these are optimized for processes in which the catalyst particles deactivate fast and need instant regeneration, making them less suitable for processes in which the catalyst deactivates slower. Other downsides include the limited contact time between substrate and catalyst, plug-flow behavior, limited catalyst-substrate ratios, and the need for a tall construction.

An object of the invention is to increase the yield of low molecular weight monocyclic aromatic compounds, such as BTX, and/or to reduce the amount of unwanted byproducts such as oxygenates in aromatization of pyrolysis vapors.

Another object of the invention is to improve energy efficiency of thermo-catalytic processes for the preparation of low molecular weight monocyclic aromatic compounds.

Another object is to provide a thermo-catalytic processes for the preparation of low molecular weight monocyclic aromatic compounds in which in the aromatization step space velocity and catalyst regeneration can be controlled independently of each other.

### BRIEF SUMMARY OF THE INVENTION

The inventors have found that at least some of these objectives can be met by performing the aromatization step of a thermo-catalytic pyrolysis process in a smooth or bubbling fluidized bed reactor.

Therefore, in accordance with the present invention there is provided a thermo-catalytic pyrolysis process for the preparation of low molecular weight monocyclic aromatic compounds from a feed stream comprising biomass and/or one or more polymers, comprising the steps of: a) subjecting the feed stream comprising biomass and/or one or more polymers to a pyrolysis treatment at a pyrolysis temperature to produce pyrolysis vapors; b) optionally cooling or heating the pyrolysis vapors; c) contacting the pyrolysis vapors with an aromatization catalyst at an aromatization temperature in a catalytic conversion step to yield a conversion product comprising low molecular weight aromatic compounds; and d) optionally recovering the low molecular weight monocyclic aromatic compounds from the conversion product; wherein catalytic conversion step c) is performed in a smooth or bubbling fluidized bed reactor.

By performing the aromatization under smooth or bubbling fluidized bed conditions, the yield of low molecular weight monocyclic aromatic compounds, such as BTX, can be improved and the amount of oxygenates can be reduced compared to when other fluidizing bed conditions, such as fast fluidized bed conditions are used. Additionally, the rate of catalyst regeneration can be controlled independently of controlling the weight hourly space velocity or catalyst/feed ratio. This allows more freedom in optimizing the reactions conditions compared to fast fluidized bed conditions, in which catalyst regeneration rate is typically closely related to space velocity. Also, applying smooth or bubbling fluidized bed conditions makes the aromatization step more flexible for adapting the conditions to changing feedstocks. Especially when non-fossil feedstocks are used, such as biomass or mixed plastic waste are used, changes in feedstock can be quite large compared to fossil feedstocks.

The superiority of the smooth and bubbling regime in terms of product quality is best illustrated by extraordinary low concentrations of oxygenates. For processing BTX streams in a conventional aromatics plant, oxygenates levels need to be low. With the smooth or bubbling fluidized bed reactor, the oxygenate levels can be in the range of 5.0 wt.% or less, such as 3.0 wt.% or less, or even 2.0 wt.% or less.

Benefits of performing the aromatization step in a smooth or bubbling fluidized bed reactor may include on or more of the following:
- the smooth or bubbling fluidized bed regime allows for a wide range in WHSV's and with a wide range of fluid supply, which is particularly useful because the composition of the feed stream of the entire process (e.g. mixed waste plastics and biomass mixtures) can vary considerably;
- longer residence time (substrate-catalyst contact time) can be achieved compared to fast fluidized bed conditions, which allows for the maximization of the so-called thermodynamic products (contrary to kinetic products) and helps in converting unwanted oxygenates into hydrocarbons;
- better product specifications: the product stream from the aromatization reactor can be very low in unwanted components such as oxygenates;
- equipment can be more compact (e.g. less reactor height is needed, and less and more compact cyclones can be used);
- smooth and bubbling fluidized bed regimes are more dense in catalyst;
- mixing of catalyst and fluid is better, resulting in good and homogeneous mass and heat transfer and less temperature differences along the fluidized bed, allowing for constant catalytic conditions;
- less complex to operate compared to *e.g.* fast fluidized bed conditions;
- deactivation of the fluidized bed catalyst occurs progressively throughout the complete bed due to the ideal mixing behavior of a smooth and bubbling fluidized bed, resulting in less difference in catalytic activity between individual particles in smooth and bubbling fluidized beds, allowing for a constant conversion.

### BRIEF DESCRIPTION OF THE DRAWINGS

Figure 1 is a schematic representation of part of a process according to the invention.
Figures 2 and 3 schematically show different fluidized bed regimes.

### DETAILED DESCRIPTION OF THE INVENTION

According to the invention there is provided a thermo-catalytic pyrolysis process for the preparation of low molecular weight monocyclic aromatic compounds from a feed stream comprising biomass and/or one or more polymers.

The thermo-catalytic process comprises the steps of: a) subjecting the feed stream comprising biomass and/or one or more polymers to a pyrolysis treatment at a pyrolysis temperature to produce pyrolysis vapors; c) contacting the pyrolysis vapors with an aromatization catalyst at an aromatization temperature in a catalytic conversion step to yield a conversion product comprising low molecular weight aromatic compounds; and d) optionally recovering the low molecular weight monocyclic aromatic compounds from the conversion product.

Depending on the temperatures at which pyrolysis and aromatization are performed, it may be necessary to heat or cool the pyrolysis vapors before aromatization. Therefore, the process may comprise an optional step b) of cooling or heating the pyrolysis vapors. However, for instance if pyrolysis and aromatization are performed at similar temperatures, it might not be desirable or necessary to perform heating or cooling of the pyrolysis vapors.

According to the invention, catalytic conversion step c) is performed in a smooth or bubbling fluidized bed reactor.

As used herein, the terms smooth or bubbling fluidized bed reactor refers to a reactor in which the compounds present in the reactor, such as fluid reactants, fluid products and catalyst particles, are subjected to smooth or bubbling fluidized bed conditions.

Preferably, pyrolysis step a) and catalytic conversion step c) take place in two different reactors, because this allows to adapt the conditions in each reactor to the desired condition for each process.

Generally, whether fluidized bed conditions are present in a reactor, and the fluidized bed regime, depend on a number of conditions, such as reactor size and geometry, density and size of solid particles, amount of catalyst, flow rate and superficial velocity of the fluid. Fluidization behavior of solid particles can for instance be explained using the Geldart particle classification. According to this classification, solid particles can be categorized in four types: A) aeratable, B) sand-like, C) cohesive, and D) spoutable. Each of these types of particles behave differently at a given superficial gas velocity, as explained in detail for instance in D. Kunii, and Octave Levenspiel, Fluidization Engineering, 2nd edition, Butterworth-Heinemann, 1991. Preferably, the aromatization catalyst used in step c) comprises a plurality of solid catalyst particles of type A according to the Geldart classification. Whether a plurality of solid particles can be classified as Geldart type A is preferably established empirically as described in the publication of Kunii and Levenspiel mentioned above. Alternatively, a definition for Geldart type A particles that can be used is a plurality of solid particles having a bulk density of around 1400 kg/m³ or less and/or an average particle diameter of 20-125 µm.

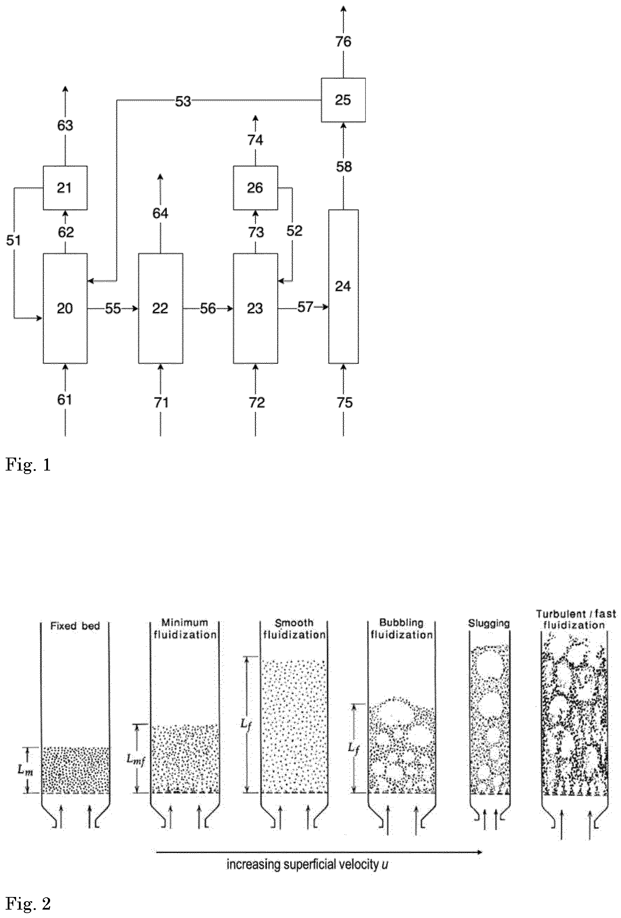

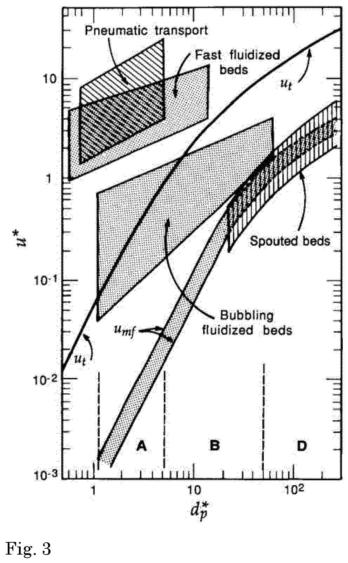

In figures 2 and 3, schematic overviews are shown of the fluidized bed regimes that can be encountered with increasing superficial velocity (u) of a fluid in a reactor. Generally, fluidized bed conditions are achieved when the superficial velocity of a fluid is above the minimum fluidization velocity *u*_{mf}. Above the minimum fluidization velocity, fluidized bed regimes that can be encountered with increasing superficial velocity, for instance in the case of Geldart type A particles, include: smooth fluidized bed, bubbling fluidized bed, and above the terminal velocity ut: slugging and/or fast fluidized bed. In the slugging and fast fluidized bed regimes, there is an increasing degree of entrainment of catalyst particles in the fluid flow. Preferably, such entrainment of particles in the fluid flow is prevented as much as possible. Fast fluidized bed conditions are for instance typically applied in modern fluid catalytic cracking (FCC) processes, but are less suitable for the aromatization step of the present invention.

As used herein, the term smooth or bubbling fluidized bed conditions refers to conditions where the superficial velocity of the fluid is equal to or above the minimum fluidization velocity *u*_{mf}, and below the terminal velocity *u*ₜ above which significant entrainment of catalyst particles may occur. Empirical measurements can be performed on the catalyst bed in order to assess under which fluidization regime the reaction operates or to which extent entrainment of catalyst particles occurs, for instance by placing a gamma radiation source on one side of the reactor and measuring the intensity of the transmitted radiation on the other side on different heights along the reactor. Additionally or alternatively, it is possible to calculate or predict the superficial flow and/or other conditions that should be applied in order to achieve smooth or bubbling fluidized bed conditions, for instance based on a diagram such as the diagram of figure 3, or based on a cold flow model, which is a transparent model setup in which catalyst particles are subjected to gases with different superficial velocities, and in which the resulting fluidization regime can be observed.

As mentioned above, different parameters play a role in whether and what type of fluidized bed properties, such as smooth or bubbling fluidized bed conditions are achieved in a reactor, and the parameters may need to be optimized for each specific application. Below, example values of some of these conditions are described in more detail.

Preferably, the weight hourly space velocity is in the range of 0.1-10.0 h⁻¹, preferably 0.5-2.0 h⁻¹, more preferably 0.7-1.5 h⁻¹. As used herein, the weight hourly space velocity (WHSV) is defined as the mass of pyrolysis vapor (in kg per hour) that is led over a mass of aromatization catalyst present in the aromatization reactor (in kg). For instance, when 1000 kg per hour of pyrolysis vapors are led through a catalyst bed of 1000 kg, the WHSV is 1 h⁻¹. In this equation, the mass of aromatization catalyst refers to the mass of entire mass of catalyst particles present in the aromatization reactor. In cases where the catalyst particles comprise, for instance, active domains (e.g. zeolite domains) dispersed in an amorphous binder, the mass of the catalyst for calculating the WHSV refers to the mass of the entire catalyst particles, and not the mass of the active domains only.

In embodiments, the gas flow of the pyrolysis vapors entering the smooth or bubbling fluidized bed reactor is 200 to 10 000 kg/h, preferably 400 to 7 000 kg/h.

In embodiments, the amount of catalyst particles present in the aromatization reactor is 200 to 10 000 kg, preferably 400 to 7 000 kg.

In embodiments, the aromatization is performed in a substantially cylindrical vessel, meaning that the horizontal cross-section of the vessel is substantially circular. The aromatization may also be performed in a cuboid vessel, meaning that the horizontal cross-section of the vessel is substantially square, for instance in case the vessel is made of refractory material. Preferably, the vessel has a diameter of 0.5-4.0 m, more preferably 1.0-2.0 m.

The height of the vessel in which aromatization is performed should be enough to accommodate the smooth or bubbling fluidized catalyst bed. For instance, using the superficial velocities, and aromatization catalyst particle size and density as described herein, the height of the catalyst bed can be in the order of magnitude of 2.0 m. Therefore, the height of the vessel is preferably 5.0 m or more, such as 5.0-15 m, or 6.0-10 m.

Preferably, the aromatization catalyst is present in the aromatization reactor in the form of a plurality of solid catalyst particles. The catalyst particles preferably have an average particles size of 1-150 µm, preferably, 20-120 µm, such as 30-100 µm.

The bulk density of the catalyst particles may be 1400 kg/m³ or less, preferably in the range of 500-1300 kg/m³, more preferably in the range of 700-1000 kg/m³.

Catalyst particles that may be particularly suitable as aromatization catalyst, and/or which may be especially suitable for fluidization are commercial FCC catalyst particles, for instance obtained from Albemarle Catalysts Company B.V.

Preferably, the superficial velocity of the pyrolysis vapors entering the aromatization reactor is 0.005 m/s or more, preferably 0.01 to 1.0 m/s, more preferably 0.02 to 0.8 m/s.

In embodiments, step c) of contacting the pyrolysis vapors with an aromatization catalyst at an aromatization temperature in a catalytic conversion step to yield a conversion product further yields carbonaceous deposits on the aromatization catalyst, and step c) may further comprise the steps of: c1) extracting a fraction of the aromatization catalyst comprising carbonaceous deposits from the aromatization reactor thereby creating a catalyst circulation stream; c2) separating entrained fluid from the aromatization catalyst comprising carbonaceous deposits of the catalyst circulation stream, preferably using a stripper; c3) regenerating the aromatization catalyst in a regenerator, wherein the regenerator is preferably also a smooth or bubbling fluidized bed reactor; c4) feeding regenerated aromatization catalyst to the aromatization reactor; thereby obtaining circulation of aromatization catalyst.

Separating entrained fluid, such as fluid reactants, BTX, and/or other fluid products from the catalyst may be performed via stripping, for instance using nitrogen gas and/or steam.

Regeneration of the aromatization catalyst is preferably performed in the presence of oxygen, for instance by using air. Preferably, regeneration is performed at a regeneration temperature (T_{reg}) of 500 °C or higher, preferably 600 °C or higher, more preferably 650 °C or higher. At too high temperatures, the aromatization catalyst may get damaged. Therefore, preferably, regeneration of the aromatization catalyst is performed at temperatures below 900 °C, such as 700-800 °C.

Depending on the rate at which carbonaceous deposits are formed on the catalyst, and depending on the degree of deactivation of the catalyst caused by the formation of carbonaceous deposits, the frequency at which the aromatization catalyst should be regenerated may vary. When using smooth or bubbling fluidized bed conditions, the rate of circulation of the catalyst can be controlled independently from the weight hourly space velocity. This is in contrast to fast fluidization conditions (which is comparable to plug flow conditions) in a riser, where the catalyst travels along with the gaseous stream of reactants and products. In embodiments, the total amount of aromatization catalyst present in the aromatization reactor is circulated between the aromatization reactor and the regenerator 0.2-20 times per hour, preferably 0.5-15 times per hour, more preferably 1-10 times per hour.

Preferably, the regenerator also operates under smooth or bubbling fluidized bed conditions.

In embodiments, contacting the pyrolysis vapors with an aromatization catalyst in the smooth or bubbling fluidized bed reactor is performed at aromatization temperature (Tₐᵣₒₘ) in the range of 300 to 650 °C, preferably 400 to 600 °C, more preferably 500 to 575 °C, such as 540 to 560 °C.

After catalytical conversion in the aromatization reactor, product gases may be separated from the catalyst particles, e.g. using a cyclone train that may for instance be placed outside the aromatization reactor or in the freeboard section of the aromatization reactor. Because of the smooth or bubbling fluidized bed conditions, the amount of entrained particles in the fluid product stream is typically low because the superficial velocity is far below the terminal velocity of most of the catalyst bed particles.

The gauge pressure upstream the aromatization reactor is preferably 0.2 to 2.5 bar, more preferably 0.5 to 2.0 bar, such as 0.5-1.5 bar.

The fluidized catalyst bed will present resistance to the fluid flow, which may lead to a pressure drop over the aromatization reactor. This pressure drop may for instance be in the range of 0.05-1.5 bar, such as 0.10-1.0 bar.

The pyrolysis treatment may for instance be performed at a pyrolysis temperature (T_{pyr}) in the range of 400 to 700 °C, preferably 400 to 600 °C.

The aromatization reactor may be fed with the pyrolysis vapors via a gas distributor system, e.g. a plate or tubes with tuyeres or a ringed sparger. The advantage of such distributor systems is that gas is distributed well, which has a positive influence on the fluidization of the bed. These systems can also easily be replaced when necessary.

In embodiments, the average residence time of fluid in the smooth or bubbling fluidized bed present in the aromatization reactor is less than 2 minutes, preferably less than 1 minute, more preferably less than 30 seconds. Typically, the average residence time of fluid in the smooth or bubbling fluidized bed will be 0.5 second or more, for instance 1.0-60 seconds, or 2.0-45 seconds.

The aromatization catalyst may comprise one or more of a zeolite catalyst, a non-zeolite catalyst, a metal catalyst and/or a metal oxide catalyst. In a specific aspect, the aromatization catalyst is a zeolite catalyst, suitably selected from aluminosilicates, SAPOs, silicates and combinations thereof. It has been found that the aromatization catalyst preferably is acidic. The acidity may be influenced by the structure of the aluminosilicate and also by the ratio between silicate moieties and aluminate moieties in the aluminosilicate. Suitable silica-alumina ratios include those in the range of 5 to 100, preferably, from 10 to 80, more preferably from 20 to 60. Another feature that may play a role in the performance of the present catalyst is the pore diameter. It has been found that particularly good results are obtained if the pore diameter of the aromatization catalysts is in the range of 4.5 to 6.5 Å, preferably from 5 to 6 Å.

The zeolite catalyst is preferably selected from the group consisting of (S)AlPO-31, EU-1, ferrierite, IM-5, MCM-22, mordenite, SSZ-20, SSZ-23, SSZ-55, SUZ-4, TNU-9, zeolite A, zeolite beta, zeolite X, zeolite Y, ZSM-11, ZSM-23, ZSM-35, ZSM-5, ZSM-57 and combinations thereof and can also be treated, exchanged, or impregnated with metals in order to improve the yield of aromatics. In a specific aspect, the zeolite catalyst is ZSM-5.

Metals could be chosen from nickel, platinum, vanadium, palladium, manganese, cobalt, zinc, copper, chromium, gallium, sodium, bismuth, tungsten, zirconium, indium, tin, thallium, lead, molybdenum, and/or any of their oxides, among others.

The aromatization catalyst may further comprise an amorphous binder. Thus, the catalyst may suitably comprise an amorphous binder in addition to a zeolite. The amorphous binder gives the particle thus obtained strength, density, shape, and provides a certain particle size to the catalyst particles. Therefore, the amorphous binder can suitably be selected from inorganic refractory oxides, in particular alumina, silica, silica-alumina, titania, zirconia, clays, layered mixed-metal oxides, phosphates, sulphonates and mixtures thereof.

When a binder is used, the amount of the binder in such combinations may vary within wide ranges. Suitably the amount of amorphous binder in a zeolitic second catalyst is in the range of 30 to 80 wt.%, preferably, 40 to 70 wt.%, based on the weight of the zeolite and the amorphous binder. Such a ratio not only provides a particle with a satisfactory mechanical strength, but is also, in the case of silica-alumina, provide the synergistic effect of an increased aromatic compound yield, compared to the proportionally expected yield. In a process according to the invention, the aromatization catalyst may be regenerated by contacting the catalyst with carbonaceous deposits with oxygen to yield a regenerated aromatization catalyst.

In figure 1, a schematic overview of part of a process according to the invention is shown. Pyrolysis vapors (61) enter at the bottom of aromatization reactor (20). Product vapors with entrained solid particles, such as catalyst particles and/or coke (62) are led to cyclone (21), in which catalyst particles and other solids are separated from the product vapor stream, and fed back (51) into aromatization reactor (20). Product vapors (63) are led out of cyclone (21). During the aromatization reaction, catalyst circulation stream (55) is extracted from the fluidized catalyst bed. The catalyst particles in the catalyst circulation stream (55) will typically comprise catalyst particles containing different amounts of carbonaceous deposits. In stripper (22), recoverable fluids including products such as BTX are stripped from the catalyst particles using stripper gas (71), and a stream containing stripper gas and recoverable fluids (64) exits the top of stripper (22). Catalyst circulation stream without fluids (56) is led to regenerator (23) in which carbonaceous deposits are burned from the catalyst particles using regeneration gas (72), *e.g.* air. Combustion gases with entrained catalyst particles (73) are led to cyclone (26), which is used to separate entrained catalyst particles from the combustion gases. Entrained catalyst particles (52) are led back to the regenerator and combustion gases (74), which typically comprises regeneration gas enriched with combustion products such as CO and/or CO₂, exit cyclone (26). Regenerated catalyst circulation stream (57) is led to riser (24) where riser gas (75) is used to transport the regenerated catalyst particles to cyclone (25). In cyclone (25), this stream is separated again in regenerated catalyst particles (53) and riser gas (76), and regenerated catalyst particles (53) are led back to aromatization reactor (20).

### EXAMPLES

### Example 1.

A thermo-catalytic pyrolysis process for the preparation of low molecular weight monocyclic aromatic compounds according to the invention was performed using mixed plastic waste (DKR350) and crude glycerol as feed, respectively.

### Example 1-1. Mixed plastic waste (DKR350) as feedstock

The feedstock, mixed plastic waste according to the DKR350 specification, is a mixture of different polymers, such as polyethylene, polypropylene, polyethylene terephthalate, and polystyrene. DKR350 may also contain fractions of other polymers, such as polyamides, polycarbonates, and other less prevalent polymers. In addition, DKR350 contains a fraction of biogenic material, originating from various types of biomass. Analyses have shown that this feedstock can contain up to 10 wt.% oxygen atoms. This oxygen can be present in the biogenic fraction, but also in the polymer fraction (for example the polyethylene terephthalate).

The mixed plastic waste (DKR350) was subjected to a pyrolysis step in a pyrolysis reactor and a catalytic aromatization step in an aromatization reactor. The pyrolysis step was performed in a reactor having an inner diameter of 168 mm, while utilizing silver sand with an average particle size of 225 µm (Geldart B type) as heat transfer medium. The sand loading in the pyrolysis reactor was 10 kg, resulting in a fluidized bed height of approximately 500 mm. A feed rate of 5 to 10 kg/h of feedstock towards the pyrolysis reactor was used. The heat transfer medium in the pyrolysis reactor was fluidized using nitrogen gas, at 2.5 kg/h, via a gas distribution plate. This resulted in a superficial gas velocity of 0.07 to 0.1 m/s in the fluidized bed pyrolysis reactor, which corresponds to 2.5 to 3.0 times the minimum fluidization velocity for the used heat transfer medium, meaning that there were bubbling fluidized bed conditions in the pyrolysis reactor. The residence time of feedstock in the fluidized bed was less than 2 seconds. The pyrolysis temperature (T_{pyr}), as measured by at least two thermocouples located directly in the fluidized bed, was between 500 and 700 °C and the gauge pressure inside the pyrolysis reactor was between 100 and 500 mbar.

The aromatization step was performed in a fluidized bed aromatization reactor having an inner diameter of 256 mm. FCC-like catalyst particles with an average particle size of 70 µm and a density of approximately 780 kg/m³ when fluidized (Geldart A type) were used as catalyst. The catalyst loading in the catalytic reactor was 10 kg. The superficial gas velocity of 0.06 to 0.1 m/s, corresponding to approximately 30 to 60 times the minimum fluidization velocity, meaning that there were bubbling fluidized bed conditions in the aromatization reactor. The WHSV was between 0.5 and 1.0 h⁻¹ and the residence time in the catalyst bed was approximately 2 seconds. The aromatization temperature (Tₐᵣₒₘ), as measured by a thermocouple located directly inside the catalyst bed, was 550°C and the gauge pressure inside the catalytic reactor was between 20 and 300 mbar.

The BTX rich product stream exiting the aromatization reactor was transferred to a condensation section where the condensables were retrieved as a liquid phase product, and the lights (non-condensables, such as methane, hydrogen, carbon monoxide, carbon dioxide, and propane) remained in the gas phase. The liquid product was subsequently analyzed. The quantification of benzene, toluene, and xylenes was performed on a GC-FID by means of an internal standard method where octane was used as internal standard. The weight fraction of oxygenates was also determined. The results are presented in Table 1.

### Example 1-2. Crude glycerol as feedstock

Apart from glycerol itself, crude glycerol typically contains some contaminants such as ashes (mainly potassium salts), water, and fatty-acid methyl esters. It can also contain a relatively small fraction of methanol. Analyses have shown that ash levels can be as high as 6 wt%, whereas water levels can be up to 5 wt%. Fatty-acid methyl ester levels can be as high as 10 wt%. Based on the atomic ratios of pure glycerol, the glycerol feedstock contains ca. 52 wt% of oxygen atoms and is therefore rich in oxygen.

Using crude glycerol as a feedstock, pyrolysis was performed in a liquid-fed pyrolysis reactor, followed by aromatization in a fluidized bed aromatization reactor. The aromatization reactor, and the equipment for condensation and analysis of the product stream is the same as described above for the example in which mixed plastic waste was used as feedstock.

The pyrolysis step was performed in a reactor having an inner diameter of 498 mm in which preheated feedstock was introduced using a spray nozzle. A feedrate of 5 to 10 kg/h of feedstock towards the pyrolysis reactor was used. The pyrolysis reactor was flushed using nitrogen gas, at 2.0 kg/h. The pyrolysis residence time in the pyrolysis reactor was in the order of seconds. The pyrolysis was performed at a pyrolysis temperature (T_{pyr}) between 450 and 500 °C as measured using a thermocouple located directly in the pyrolysis reactor. Gauge pressure inside the pyrolysis reactor was between 100 and 500 mbar.

Aromatization was performed in the same reactor as used for the process in which mixed plastic waste was the feedstock. The catalyst loading was 15 kg. The superficial gas velocity of 0.06 to 0.1 m/s, corresponding to approximately 30 to 60 times the minimum fluidization velocity, meaning that there were bubbling fluidized bed conditions in the aromatization reactor. The resulting WHSV was 0.5 to 1.0 h⁻¹ and the residence time in the catalyst bed was approximately 1 to 2 seconds. The catalyst was also the same as the one used in the mixed plastic waste process. The aromatization temperature (Tₐᵣₒₘ) was 550 °C, as measured by a thermocouple located directly inside the catalyst bed, and the gauge pressure inside the catalytic reactor was between 20 and 300 mbar.

Similarly to when the feedstock was mixed plastic waste, the product stream was condensed and analyzed, and the results are presented in Table 1.

**Table 1. Product distribution (concentrations in condensed product stream)**

| | Feed | |
|---|---|---|
| | mixed plastic waste (DKR350) | crude glycerol |
| Benzene | 12.42 wt% | 1.34 wt% |
| Toluene | 20.30 wt% | 12.44 wt% |
| m,p-Xylene | 8.88 wt% | 27.90 wt% |
| o-Xylene | 3.10 wt% | 7.19 wt% |
| Total oxygenates | 3600 ppm | 4764 ppm |

From the product distributions, it can be seen that only a low weight fraction of oxygenated compounds (not to be mistaken for the weight fraction of oxygen atoms present in the product) is present in the product, despite the large weight fraction of oxygen atoms present in the feedstock used.

### Comparative example 1.

The data obtained in example 1 were compared to data published in Jarvis et al., Energy Fuels 2018, 32, 1733. In this article, vacuum gas oil mixed with 5 wt.% of biomass pyrolysis oxygenates was catalytically upgraded using an FCC catalyst in a riser reactor (*i*.*e*., a Davison Circular Riser reactor). It can be seen in figure 7 of this article that even though only 5 wt.% of biomass pyrolysis oxygenates were added to the vacuum gas oil feed, corresponding to a feedstock oxygen content of approximately 1.3 wt%, there is a significant fraction of oxygenates in the resulting product, meaning that no significant oxygen removal takes place in the process of Jarvis *et al.* Compared to this, there is more oxygen removal in example 1 above, because the fraction of oxygenated compounds in the product is lower than what would be expected from Jarvis *et al.,* when taking into account the weight fraction of oxygen atoms present in the respective feedstocks. This shows that the smooth or bubbling fluidized bed conditions used in the aromatization step of example 1 indeed result in higher removal of oxygenates.

## Claims

1. A thermo-catalytic pyrolysis process for the preparation of low molecular weight monocyclic aromatic compounds from a feed stream comprising biomass and/or one or more polymers, comprising the steps of:
a) subjecting the feed stream comprising biomass and/or one or more polymers to a pyrolysis treatment at a pyrolysis temperature to produce pyrolysis vapors;
b) optionally cooling or heating the pyrolysis vapors;
c) contacting the pyrolysis vapors with an aromatization catalyst at an aromatization temperature in a catalytic conversion step to yield a conversion product comprising low molecular weight aromatic compounds; and
d) optionally recovering the low molecular weight monocyclic aromatic compounds from the conversion product;
wherein catalytic conversion step c) is performed in a smooth or bubbling fluidized bed reactor.

2. Process according to claim 1, wherein pyrolysis step a) and catalytic conversion step c) take place in two different reactors.

3. Process according to claim 1 or 2, wherein step c) further yields carbonaceous deposits on the aromatization catalyst, and wherein step c) further comprises the steps of:
c1) extracting a fraction of the aromatization catalyst comprising carbonaceous deposits from the aromatization reactor thereby creating a catalyst circulation stream;
c2) separating entrained fluid from the aromatization catalyst comprising carbonaceous deposits of the catalyst circulation stream, preferably using a stripper;
c3) regenerating the aromatization catalyst in a regenerator, wherein the regenerator is preferably also a smooth or bubbling fluidized bed reactor;
c4) feeding regenerated aromatization catalyst to the aromatization reactor; thereby obtaining circulation of aromatization catalyst;
thereby obtaining circulation of the aromatization catalyst.

4. Process according to claim 3, wherein the total amount of aromatization catalyst in the aromatization reactor is circulated 0.2-20 times per hour, preferably 0.5-15 times per hour, more preferably 1-10 times per hour.

5. Process according to any one of claims 1-4, wherein the weight hourly space velocity is 0.1-10.0 h⁻¹, preferably 0.5-2.0 h⁻¹, more preferably 0.7-1.5 h⁻¹.

6. Process according to any one of claims 1-5, wherein the superficial velocity of the pyrolysis vapors in the aromatization reactor is 0.005 m/s or more, preferably 0.01 to 1.0 m/s, more preferably 0.02 to 0.8 m/s.

7. Process according to any one of claims 1-6, wherein the aromatization catalyst comprises a plurality of Geldart type A solid catalyst particles.

8. Process according to any one of claims 1-7, wherein the aromatization catalyst comprises a plurality of solid catalyst particles having an average particles size of 1-150 µm, preferably, 20-120 µm, such as 30-100 µm, and/or a bulk density of 500-1300 kg/m³, preferably 700-1000 kg/m³.

9. Process according to any one of claims 1-8, wherein contacting the pyrolysis vapors with an aromatization catalyst in the smooth or bubbling fluidized bed reactor is performed at aromatization temperature (Tₐᵣₒₘ) in the range of 300 to 650 °C, preferably 400 to 600 °C, more preferably 500 to 550 °C.

10. Process according to any one of claims 3-9 to the extent dependent on claim 3, wherein regenerating the aromatization catalyst is performed at a regeneration temperature (T_{reg}) in the range of 500 °C or higher, preferably 600 °C or higher, more preferably 650 °C or higher, such as 700-800 °C.

11. Process according to any one of claims 1-9, wherein the gauge pressure upstream the aromatization reactor is 0.2 to 2.5 bar, preferably 0.5 to 2.0 bar, and wherein the pressure drop over the aromatization reactor is 0.05-1.5 bar.

12. Process according to any one of claims 1-11, wherein pyrolysis treatment is performed at pyrolysis temperature (T_{pyr}) in the range of 400 to 700 °C, preferably 400 to 600 °C.

13. Process according to any one of the preceding claims, wherein the residence time of the gas in the smooth or bubbling fluidized bed reactor is less than 2 minutes, preferably less than 1 minute, more preferably less than 30 seconds.

14. Process according to any one of the preceding claims, wherein the aromatization catalyst comprises one or more selected from the group consisting of ZSM-5, ZSM-11, ZSM-35, ZSM-23, ferrierite, zeolite beta, zeolite Y, zeolite X, mordenite, zeolite A, IM-5, SSZ-20, SSZ-55, MCM-22, TNU-9, metal treated, exchanged or impregnated catalyst and combinations thereof.

15. Process according to claim 14, wherein the aromatization catalyst further comprises an amorphous binder.
